# EUROPÄISCHE PATENTSCHRIFT

(11) **EP 3 626 525 B1**
(45) Veröffentlichungstag und Bekanntmachung des Hinweises auf die Patenterteilung: **29.12.2021**
(21) Anmeldenummer: 19196573.0
(22) Anmeldetag: 10.09.2019
(51) Int. Cl.: B60N 2/75, B60N 2/90

(54) **FAHRZEUGSITZ MIT BEDIENUNGSEINRICHTUNG**
VEHICLE SEAT WITH CONTROL DEVICE
SIÈGE DE VÉHICULE POURVU DE DISPOSITIF DE COMMANDE

(30) Priorität: 19.09.2018 DE 102018123009; 21.08.2019 DE 102019122539
(43) Veröffentlichungstag der Anmeldung: 25.03.2020
(73) Patentinhaber: GRAMMER AG, 92289 Ursensollen (DE)
(72) Erfinder: Ott, Richard, 92245 Kümmersbruck (DE)
(74) Vertreter: Hannke, Christian

(56) Entgegenhaltungen:
- GB-A- 2 201 758
- US-A- 4 669 780

## Beschreibung

Die Erfindung betrifft einen Fahrzeugsitz mit einer Bedienungseinrichtung zum Bedienen von Fahrzeugfunktionen, wobei die Bedienungseinrichtung mittels einer Führungseinrichtung an einer Armlehne des Fahrzeugsitzes angeordnet und fest mit dieser verbunden ist und ein an einem Hebelelement angeordnetes Bedienelement umfasst, gemäß dem Oberbegriff des Patentanspruches 1.

Fahrzeugsitze haben, insbesondere im Nutzfahrzeugbereich, häufig Joysticks und verschiedene Bedienelemente in einem Bereich der rechten Armlehne angeordnet. Dies trifft insbesondere für Traktoren und dergleichen zu. Im Lastkraftwagen-Bereich sind Bedienelemente in der Regel nicht direkt am Fahrzeugsitz bzw. der Armlehne angeordnet, sondern im Armaturenbereich, wie es aus dem Automotive-Bereich bekannt ist.

Um im Armaturenbereich oder links und rechts vom Lenkrad Bedieninstrumente zu bedienen, ist entweder eine Veränderung der Haltung des Fahrers und damit eine Beeinträchtigung der Fahrsicherheit durch ein Nach-Vorne-Beugen erforderlich, oder das Problem vorhanden, dass zu viele Bedienelemente oder Bedienhebel im Lenkradbereich angeordnet sind, um bei einer Vielzahl von erwünschten zu bedienenden Funktionen zuverlässig den richtigen Hebel oder den richtigen Knopf betätigen zu können.

Ferner ist der beanspruchbare Bauraum im Armaturenbereich oder links und rechts vom Lenkrad bei der Vielzahl an zu bedienenden Funktionen knapp bemessen Aufgabe der Erfindung ist es demnach, eine Bedieneinrichtung zur Verfügung zu stellen, welche die Bedienung verschiedener Fahrzeugfunktionen ermöglicht und zugleich platzsparend sowie für Bediener einfach erreichbar angeordnet ist.

Diese Aufgabe wird gelöst von einem Fahrzeugsitz, insbesondere einem Lastkraftwagensitz, mit einer Bedienungseinrichtung zum Bedienen von Fahrzeugfunktionen, wobei die Bedienungseinrichtung mittels einer Führungseinrichtung an einer Armlehne des Fahrzeugsitzes angeordnet und fest mit dieser verbunden ist und ein an einem Hebelelement angeordnetes Bedienelement umfasst. Erfindungsgemäß ist das Hebelelement mittels der Führungseinrichtung entlang einer Längenachse der Armlehne relativ zu der Armlehne bewegbar, wobei das Hebelelement durch eine erste Translationsbewegung entlang der Längenachse nach vorne von einem eingefahrenen Zustand in einen ausgefahrenen Zustand und durch eine zweite Translationsbewegung entlang der Längenachse nach hinten von dem ausgefahrenen Zustand in den eingefahrenen Zustand überführbar ist.

Durch die an der Armlehne angeordnete erfindungsgemäße Ausbildung einer Bedienungseinrichtung, die ein- und ausziehbar sein kann, ist eine nicht störende Bedienungseinrichtung gegeben, welche jederzeit der Person, die diesen Fahrzeugsitz benutzt, zur Hand ist, also bedient werden kann, ohne dass die Person den Arm von der Armlehne nehmen muss.

Bei dem Fahrzeugsitz handelt es sich bevorzugt um einen Nutzfahrzeugsitz und besonders bevorzugt um einen Lastkraftwagensitz. Der Fahrzeugsitz ist dabei bevorzugt innerhalb einer Fahrzeugkabine, bevorzugt einer Nutzfahrzeugkabine und besonders bevorzugt einer Lastkraftwagenkabine angeordnet.

Der Fahrzeugsitz bzw. die Armlehne erstrecken sich entlang einer Höhenachse Z, einer Breitenachse Y und einer Längenachse X, wobei den jeweiligen Achsen jeweils zwei Richtungen zuzuordnen sind. So umfasst die Höhenachse Z die Richtungen Z1 (nach oben) und Z2 (nach unten). Die Breitenachse Y umfasst die Richtungen Y1 (nach rechts) und Y2 (nach links). Die Längenachse X umfasst die Richtungen X1 (nach vorne) und X2 (nach hinten).

Der verwendete Ausdruck "im Wesentlichen" soll dahingehend auszulegen sein, dass auch geringfügige Toleranzabweichungen mit beansprucht werden. So kann die Abweichung einen Winkel von bevorzugt kleiner 10° weiter bevorzugt kleiner 7,5°, noch weiter bevorzugt kleiner 5° betragen. Dies gilt auch für die im Folgenden verwendeten Ausdrücke "im Wesentlichen".

Unter Fahrzeugfunktion werden erfindungsgemäß solche Funktionen verstanden, welche Einrichtungen in und/oder am Fahrzeug bzw. mit dem Fahrzeug signaltechnisch verbundene Einrichtungen betreffen. Dabei kann es sich beispielsweise um ein Multimediasystem, eine Klimaanlage, ein mit dem Fahrzeug verbundenes Telefon bzw. Mobiltelefon/Smartphone, Fahrzeugsitzfunktionen, insbesondere eine Sitzhöheneinstellung, sowie eine vertikale Sitzdämpfung, eine Sitzlängsverstellung, eine Rückenlehnenneigung, eine Sitzneigung, eine Sitzklimatisierungseinrichtung, eine Sitzkontureinstellungseinrichtung und/oder eine Massageeinrichtung, oder dergleichen handeln. Diese Aufzählung soll nur beispielhaft sein und nicht als abschließend verstanden werden.

Erfindungsgemäß handelt es sich bei dem eingefahrenen Zustand um einen Lagerzustand bzw. einen nicht-Verwendungszustand und bei dem ausgefahrenen Zustand um einen Gebrauchszustand bzw. ein Verwendungszustand, in welchem durch die Bedienungseinrichtung bzw. das Bedienelement die entsprechenden Fahrzeugfunktionen eingestellt werden können.

Bevorzugt ist die Bedienungseinrichtung in die Armlehne des Fahrzeugsitzes integriert, wobei die Bedienungseinrichtung in dem eingefahrenen Zustand einem entsprechenden Oberflächenverlauf der Armlehne angepasst ist. Erfindungsgemäß handelt es sich bei einer festen Verbindung um eine dauerhafte Verbindung, wie eine Schweißverbindung, eine Klebeverbindung, eine Steckverbindung, eine Nietenverbindung, eine Schraubverbindung, eine Bolzenverbindung oder dergleichen.

Bevorzugt ist die Bedienung der Fahrzeugfunktionen mittels des Bedienelements der Bedienungseinrichtung möglich. Weiterhin ist das Bedienelement durch die Bewegung des damit verbundenen Hebelelements ebenfalls in analoger Weise bewegbar.

Außerdem ist die Bedienungseinrichtung signaltechnisch mit dem Fahrzeug, dem Fahrzeugsitz bzw. der Fahrzeugelektronik verbunden, um das Bedienen der entsprechenden Fahrzeugfunktionen zu gewährleisten.

Gemäß einer bevorzugten Ausführungsform ist die Bedienungseinrichtung entlang der Längenachse vorne an der Armlehne angeordnet. Vorzugsweise ist ein Arm eines Bedieners der Bedieneinrichtung bzw. des Fahrzeugsitzes so auf der Armlehne angeordnet, dass sich eine Hand entlang der Längenachse vorne auf der Armlehne und sich ein Ellbogengelenk entlang der Längenachse hinten auf der Armlehne befindet. Durch die bevorzugte Anordnung der Bedienungseinrichtung ist diese für einen Bediener besonders einfach erreichbar.

Gemäß einer bevorzugten Ausführungsform ist das Bedienelement scheibenartig ausgebildet. Das Bedienelement gemäß Anspruch 1 erstreckt sich im Wesentlichen in der Längenachse und in einer Breitenachse der Armlehne, wobei das Bedienelement bezogen auf eine Höhenachse der Armlehne auf einer oberen Fläche des Hebelelements angeordnet ist. Durch die flache scheibenartige Ausgestaltung des Bedienelements wird der benötigte Bauraum entlang der Höhenachse reduziert.

Das Bedienelement ist zylinderförmig ausgebildet, wobei eine axiale Richtung des Zylinders parallel zu der Höhenachse angeordnet ist. Die Anordnung des Bedienelements auf dem Hebelelement macht es für einen Bediener besonders einfach bedienbar.

Eine obere Fläche des Bedienelements welche entlang der Höhenachse nach oben gerichtet ist, ist berührungssensitiv ausgebildet und somit eine Eingabe von verschiedenen Zeichen und das Betätigen verschiedener Funktionen durch Betätigung mittels eines Fingers des Bedieners bzw. des Fahrers ermöglicht. Ferner weist die obere Fläche des Bedienelements ein Display und insbesondere einen Touchscreen, auf, sodass eine direkte Bedienung gewährleistet ist.

Außerdem ist es denkbar, dass eine Anzeige von getätigten und/oder bedienten Fahrzeugfunktionen durch die Bedienungseinrichtung im vorderen Bereich des Armaturenbrettes, beispielsweise auf einem Display, erfolgt. Dadurch sind die getätigten Einstellungen für den Fahrer leichter ersichtlich und er muss seinen Blick nicht auf die Bedienungseinrichtung richten.

Gemäß einer bevorzugten Ausführungsform ist das Bedienelement um eine erste Drehachse drehbar mit dem Hebelelement verbunden und die erste Drehachse ist im Wesentlichen senkrecht zu der Längenachse angeordnet. Durch die Drehbewegung des Bedienelements können beispielsweise verschiedene Funktionen ausgewählt werden und/oder eine Betätigung eines Navigationssystems, wie eine Adresseingabe mittels einzelner Buchstaben, durchgeführt werden.

Gemäß einer bevorzugten Ausführungsform sind das Hebelelement und das Bedienelement in dem eingefahrenen Zustand im Wesentlichen innerhalb der Armlehne und in dem ausgefahrenen Zustand zumindest teilweise außerhalb der Armlehne angeordnet, wobei das Bedienelement im ausgefahrenen Zustand entlang der Längenachse vor der Armlehne angeordnet ist. Auf diese Weise können das Hebelelement und das Bedienelement den Fahrer in einem eingefahrenen Zustand bei nicht-Verwendung nicht behindern und das Bedienelement in dem ausgefahrenen Zustand leicht bedient werden ohne dass der Fahrer seine Position ändern muss.

Gemäß einer bevorzugten Ausführungsform weist die Führungseinrichtung ein länglich ausgebildetes Führungselement zum Durchführen der ersten und zweiten Translationsbewegung des Hebelelements auf, wobei ein erstes axiales Ende des Führungselements fest mit der Armlehne und ein zweites axiales Ende des Führungselements fest mit dem Hebelelement verbunden ist. Somit ist das Hebelelement durch die Führungseinrichtung bzw. das Führungselement geführt angeordnet. Bevorzugt wird die erste Translationsbewegung in der Längenrichtung nach vorne durch das Führungselement begrenzt. Ebenfalls bevorzugt ist das Führungselement kraftbeaufschlagt, bevorzugt federbeaufschlagt und insbesondere als Federdruckstange, ausgebildet, wobei die Federkraft entlang der Längenachse wirkt und die erste Translationsbewegung dadurch automatisiert ausführbar ist.

Gemäß einer bevorzugten Ausführungsform ist das Führungselement sich innerhalb der Armlehne entlang des Längenachse der Armlehne erstreckend angeordnet. Somit ist das Führungselement platzsparend und sicher innerhalb der Armlehne angeordnet.

Gemäß einer bevorzugten Ausführungsform weist die Bedienungseinrichtung eine, ein Arretiermittel und ein Haltemittel umfassende, Arretierungseinrichtung auf, wobei das Arretiermittel fest mit dem Hebelelement und das Haltemittel fest mit der Armlehne verbunden ist. Durch die Arretierungseinrichtung ist die Bewegbarkeit des Hebelelements bei Bedarf einschränkbar, wodurch ein ungewollter Übergang des von dem eingefahrenen Zustand in den ausgefahrenen Zustand verhindert werden kann. Bevorzugt ist die Arretierungseinrichtung so ausgebildet, dass eine Arretierung reversibel durchführbar ist.

Gemäß einer bevorzugten Ausführungsform ist das Arretiermittel länglich ausgebildet und erstreckt sich entlang der Längenachse nach hinten, wobei das Haltemittel bezogen auf die Höhenachse an einer unteren Fläche der Armlehne angeordnet ist. Durch die beanspruchte Anordnung beeinträchtigt die Arretierungseinrichtung einen Fahrer nicht.

Gemäß einer bevorzugten Ausführungsform ist die erste Translationsbewegung durch ein Eingreifen des Arretiermittels in das Haltemittel arretierbar. Auf diese Weise ist das Hebelelement innerhalb der Armlehne arretierbar und die erste Translationsbewegung ist unterbunden. Somit ist die Bedienungseinrichtung in dem platzsparenden eingefahrenen Zustand feststellbar und kann erst bei Bedarf ausgefahren werden.

Es ist ferner denkbar, dass das Hebelelement schwenkbar um eine Achse mit der Armlehne verbunden ist, wobei diese Achse parallel zu der Höhenachse verläuft. Somit wäre eine Rotationsbewegung des Hebelelements in dem ausgefahrenen Zustand relativ zu der Armlehne in einer Ebene in der Breitenachse und der Längenachse nach links und rechts möglich. Auf diese Weise könnte der Bediener bzw. der Fahrer die Bedienungseinrichtung besser erreichen und an seine Bedürfnisse anpassen.

Ebenso wäre es denkbar, dass das Hebelelement eine weitere Achse aufweist, welche parallel zu der Breitenachse und senkrecht zu der Längenachse angeordnet ist. Diese Achse ist dem Ausgefahrenen Zustand außerhalb der Armlehne angeordnet und ermöglicht eine Rotationsbewegung des Hebelelements in der Ebene der Längenachse und der Höhenachse nach oben und unten. Dadurch kann der Bediener bzw. der Fahrer die Bedienungseinrichtung einfacher erreichen und an seine Armlänge bzw. seine Sitzposition anpassen.

Weitere Vorteile, Ziele und Eigenschaften der vorliegenden Erfindung werden anhand der anliegenden Figuren und nachfolgender Beschreibung erläutert.

In den Figuren zeigen:
- Fig. 1: eine perspektivische Ansicht von schräg hinten einer Armlehne mit der Bedienungseinrichtung in einem ausgefahrenen Zustand nach einer Ausführungsform;
- Fig. 2: eine Schnittansicht einer Armlehne mit der Bedienungseinrichtung in dem ausgefahrenen Zustand nach einer Ausführungsform;
- Fig. 3: eine Schnittansicht einer Armlehne mit der Bedienungseinrichtung in dem eingefahrenen Zustand nach einer Ausführungsform;
- Fig. 4: eine Detailansicht des Arretiermittels nach einer Ausführungsform;
- Fig. 5: eine Ansicht von unten einer Armlehne mit dem Haltemittel nach einer Ausführungsform;
- Fig. 6: eine Ansicht von unten einer Armlehne mit der Bedienungseinrichtung und der Arretierungseinrichtung in einem ausgefahrenen Zustand nach einer Ausführungsform;
- Fig. 7: eine Ansicht von unten einer Armlehne mit der Bedienungseinrichtung und der Arretierungseinrichtung in einem Übergangszustand nach einer Ausführungsform;
- Fig. 8: eine Ansicht von unten einer Armlehne mit der Bedienungseinrichtung und der Arretierungseinrichtung in einem eingefahrenen Zustand nach einer Ausführungsform;
- Fig. 9: eine schematische Darstellung der Bedienungseinrichtung an einer Armlehne des Fahrzeugsitzes in einem ausgefahrenen Zustand nach einer Ausführungsform;

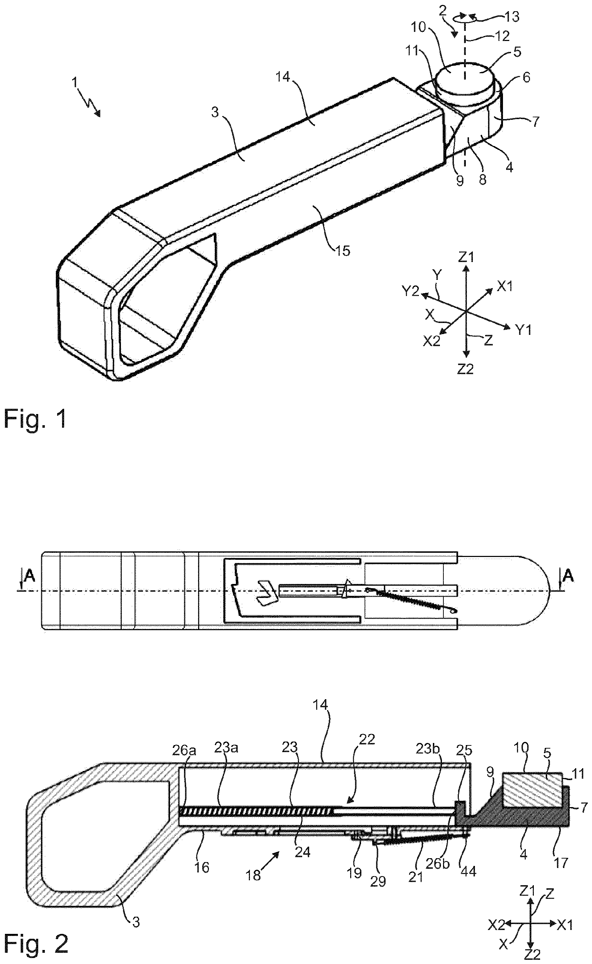

In den Figuren 1 bis 8 ist eine an eine Armlehne 3 angeordnete Bedienungseinrichtung 2 dargestellt, wobei aus Gründen der Übersichtlichkeit die weiteren Elemente eines Fahrzeugsitzes 1 nicht dargestellt sind.

Die Figur 1 zeigt die Bedienungseinrichtung 2, welche an der Armlehne 3 angeordnet ist, umfassend ein Hebelelement 4 und ein Bedienelement 5, in einem ausgefahrenen Zustand.

Der Fahrzeugsitz 1 bzw. die Armlehne 3 erstrecken sich entlang einer Höhenachse Z, einer Breitenachse Y und einer Längenachse X, wobei den jeweiligen Achsen jeweils zwei Richtungen zuzuordnen sind. So umfasst die Höhenachse Z die Richtungen Z1 (nach oben) und Z2 (nach unten). Die Breitenachse Y umfasst die Richtungen Y1 (nach rechts) und Y2 (nach links). Die Längenachse X umfasst die Richtungen X1 (nach vorne) und X2 (nach hinten). Außerdem sind die Abbildungen jeweils mit einem entsprechenden kartesischen Koordinatensystem versehen.

Das Bedienelement 5 ist scheibenartig bzw. zylinder-förmig ausgebildet, wobei es eine obere Fläche 10, welche entlang der Höhenachse Z oben (Richtung Z1) an dem Bedienelement 5 angeordnet ist (Grundfläche des Zylinders) und sich in der Längenachse X und der Breitenachse Y (radiale Richtung des Zylinders) erstreckt, und eine Seitenfläche 11, welche kreisförmig ausgebildet ist und eine Mantelfläche des Zylinders darstellt, aufweist. Das Bedienelement 5 ist über eine Fläche, die der oberen Fläche gegenüberliegend angeordnet ist, drehbar um eine erste Drehachse 12 mit dem Hebelelement 4 verbunden, wobei die erste Drehachse 12 im Wesentlichen senkrecht zu der Längenachse X und parallel zu der Höhenachse Z angeordnet ist und eine Rotationsrichtung 13 im und gegen den Uhrzeigersinn aufweist..

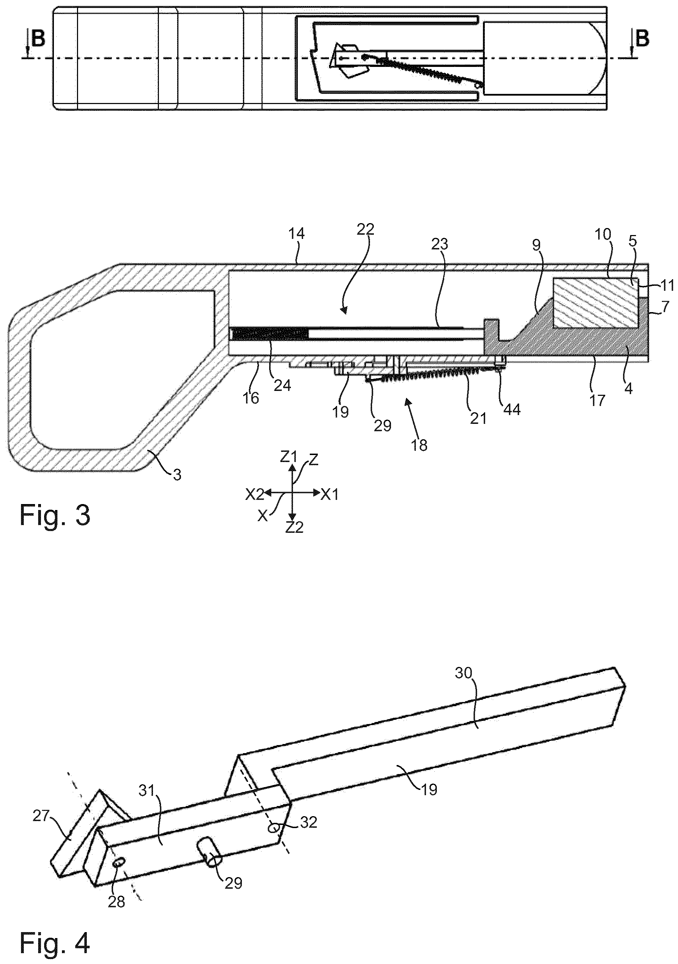

Dabei ist das Bedienelement 5 auf einer oberen Fläche 6 des Hebelelements 4 angeordnet, welche sich in der Längenachse X und der Breitenachse Y erstreckt und entlang der Höhenachse Z nach oben (Richtung Z1) gerichtet ist. Entlang der Längenachse nach hinten (Richtung X2) ist eine Mittelfläche 9 des Hebelelements 4 benachbart zu der oberen Fläche 6 angeordnet, wobei die Mittelfläche 9 gegenüber der Längenachse X geneigt verläuft und sich in der Längenrichtung X2 (nach hinten) bezogen auf die Höhenachse Z nach unten (Richtung Z2) erstreckt. Die ist nochmals in den Figuren 2 und 3 dargestellt. Das Hebelelement 4 umfasst ferner eine untere Fläche 17, welche parallel zu der oberen Fläche 6 und entlang der Höhenachse Z unten (Richtung Z2) an dem Hebelelement 4 angeordnet ist.

Weiterhin weist das Hebelelement 4 eine Seitenfläche 8 auf, welche sich in der Höhenachse Z und der Längenachse X erstreckt. Benachbart zu der Seitenfläche 8 ist eine Frontfläche 7 des Hebelelements 4 angeordnet, wobei die Frontfläche 7 bogenförmig ausgebildet ist und in der Längenrichtung X vorne (Richtung X1) am Hebelelement angeordnet ist. Die Bogenform der Frontfläche 7 ist komplementär zu dem zylinderförmigen Bedienelement 5 ausgestaltet. Das Bedienelement 5 ist gegenüber der Frontfläche 7 des Hebelelements 4 entlang der Längenachse X nach hinten (Richtung X2) versetzt angeordnet.

Die Armlehne 3, mit welcher die Bedienungseinrichtung 2 bzw. das Hebelelement 4 fest verbunden ist, weist eine obere Fläche 14 und eine untere Fläche 16, welche sich parallel in der Längenachse X und der Breitenachse Y erstrecken, und eine senkrecht dazu verlaufende Seitenfläche 15, welche sich in der Höhenachse Z und der Längenachse X erstreckt. Die obere Fläche 14 und die untere Fläche 16 erstrecken sich parallel zu der oberen Fläche 10 des Bedienelements 5.

Die weitere Ausgestaltung der Armlehne 3 ist variabel und richtet sich auch nach der Konstruktion des Fahrzeugsitzes 1 und dem Fahrzeug selbst.

Die Figuren 2, 3, 5, 6. 7 und 8 zeigen eine Arretierungseinrichtung 18, umfassend ein Arretiermittel 19 und ein Haltemittel 20, wobei die Arretierungseinrichtung 18 im Wesentlichen an der unteren Fläche 16 der Armlehne 3 und der unteren Fläche 17 des Hebelelements 4 angeordnet ist. Ferner ist das Arretiermittel 19 durch eine Zugfeder 21 mit dem Hebelelement 4 verbunden.

In den Figuren 2 und 3 ist jeweils eine Schnittansicht entlang der Längenachse X mittig durch die Armlehne 3 und die Bedienungseinrichtung 2 gezeigt.

Die Figur 2 zeigt eine Schnittansicht entlang A-A der Armlehne 3 und der Bedienungseinrichtung 2 in dem ausgefahrenen Zustand.

Das Hebelelement 4 weist zusätzlich einen hintere Abschnitt 25 auf, welcher sich im Wesentlichen in der Höhenachse X und der Breitenachse Y erstreckt und benachbart zu der Mittelfläche 9 und der untere Fläche 17 und entlang der Längenachse X hinten (Richtung X2) am Hebelelement 4 angeordnet ist. Ausgehend von der Mittelfläche 9 erstreckt sich der hintere Abschnitt 25 entlang der Höhenachse Z nach oben (Richtung Z1).

Das zylinderförmige Bedienelement 5 ist entlang der Höhenachse Z teilweise innerhalb des Hebelelements 4 angeordnet, wobei das Bedienelement 5 entlang der Höhenachse Z nach oben (Richtung Z1) aus dem Hebelelement herausragt und die Seitenfläche 11 teilweise sowie die obere Fläche 10 vollständig außerhalb des Hebelelements 4 angeordnet sind. Weiterhin ist eine Führungseinrichtung 22 gezeigt, welche ein längliches sich in der Längenachse X erstreckendes Führungselement 23 aufweist. Das Führungselement 23 ist mit einem ersten axialen Ende 26a mit der Armlehne 3 und einem zweiten axialen Ende 26b mit dem Hebelelement 4 bzw. dem hinteren Abschnitt 25 verbunden. Gemäß der Ausführungsform ist das Führungselement 23 als Federdruckstab ausgebildet. Dabei ist ein inneres Stabelement 23b bewegbar entlang der Längenachse X teilweise innerhalb eines äußeren Stabelements 23a angeordnet. Das erste axiale Ende 26a ist an dem äußeren Stabelement 23a und das zweite axiale Ende 26b an dem inneren Stabelement 23b angeordnet. Eine Druckfeder 24 ist am ersten axialen Ende 26a innerhalb des äußeren Stabelements 23a angeordnet, wobei die axiale Richtung der Druckfeder 24 parallel zu der Längenachse X verläuft und die Druckfeder 24 die erste Translationsbewegung des Hebelelements 4 entlang der Längenachse X nach vorne (Richtung X1) kraftbeaufschlagt. In dem ausgefahrenen Zustand weist die Druckfeder 24 ihre maximale Ausdehnung auf. Beim Übergang von dem eingefahrenen Zustand in den ausgefahrenen Zustand verschiebt sich das innere Stabelement 23b relativ zu dem äußeren Stabelement 23a entlang der Längenachse X nach vorne (Richtung X1) aus dem äußeren Stabelement 23a hinaus.

In dem ausgefahrenen Zustand ist das Bedienelement 5 vollständig außerhalb der Armlehne 3 angeordnet, wobei der hintere Abschnitt 25 des Hebelelements 4 innerhalb der Armlehne 3 verbleibt.

Die Figur 3 zeigt eine Schnittansicht entlang B-B der Armlehne 3 und der Bedienungseinrichtung 2 in dem eingefahrenen Zustand.

Wie gezeigt, sind das Hebelelement 4 und das Bedienelement 5 in dem eingefahrenen Zustand vollständig innerhalb der Armlehne 3, im Wesentlichen zwischen der oberen Fläche 14 und der unteren Fläche 16, angeordnet. In dem eingefahrenen Zustand ist die Frontfläche 7 des Hebelelements 4 entlang der Längenachse X bündig zu der oberen Fläche 14 und der unteren Fläche 16 des Hebelelements 4 angeordnet, wobei die Frontfläche 7 des Hebelelements 4 zumindest teilweise eine Frontfläche der Armlehne 3 ausbildet. Die obere Fläche 10 des Bedienelements 5 ist in dem eingefahrenen Zustand benachbart zu der oberen Fläche 14 bzw. einer Innenseite der oberen Fläche 14 der Armlehne angeordnet, wobei die untere Fläche 17 des Hebelelements 4 benachbart zu der untere Fläche 16 der Armlehne 3 angeordnet ist.

Ferner ist das innere Stabelement 23b in dem eingefahrenen Zustand hauptsächlich innerhalb dem äußeren Stabelement 23a angeordnet und im Vergleich zu dem eingefahrenen Zustand entlang der Längenachse X nach hinten (Richtung X2) versetzt. Die Druckfeder 24 ist im eingefahrenen Zustand komprimiert.

In der Figur 4 ist eine Detailansicht des Arretiermittels 19 dargestellt. Das Arretiermittel 19 ist länglich ausgebildet weist einen Führungsabschnitt 30 und einen Rastabschnitt 31 aus, wobei der Führungsabschnitt 30 entlang der Längenachse X in der Längenrichtung X1 (nach vorne) vor dem Rastabschnitt 31 angeordnet ist. Ferner ist das Rastabschnitt 31 entlang der Höhenachse Z nach unten (Richtung Z2) versetzt zu dem Führungsabschnitt 30 angeordnet. Der Rastabschnitt 31 ist mittels einer dritten Achse 32 schwenkbar mit dem Führungsabschnitt 30 verbunden.

An dem Rastabschnitt 31 ist ferner ein mittels einer zweiten Achse 28 schwenkbar angeordnetes Rastelement 27 vorgesehen. Die zweite Achse 28 und die dritte Achse 32 erstrecken sich parallel zueinander in der Höhenachse Z senkrecht zu der Längenachse X, wobei die zweite Achse 28 und die dritte Achse 32 entlang der Längenachse X beabstandet auf dem Rastabschnitt 31 angeordnet sind. Weiterhin ist ein erstes Stiftelement 29 auf dem Rastabschnitt 31 zwischen der zweiten Achse 28 und der dritten Achse 32 angeordnet, der sich entlang der Höhenachse Z nach unten (Richtung Z2) erstreckt. Das Rastelement 27 ist im Wesentlichen dreieckig ausgebildet.

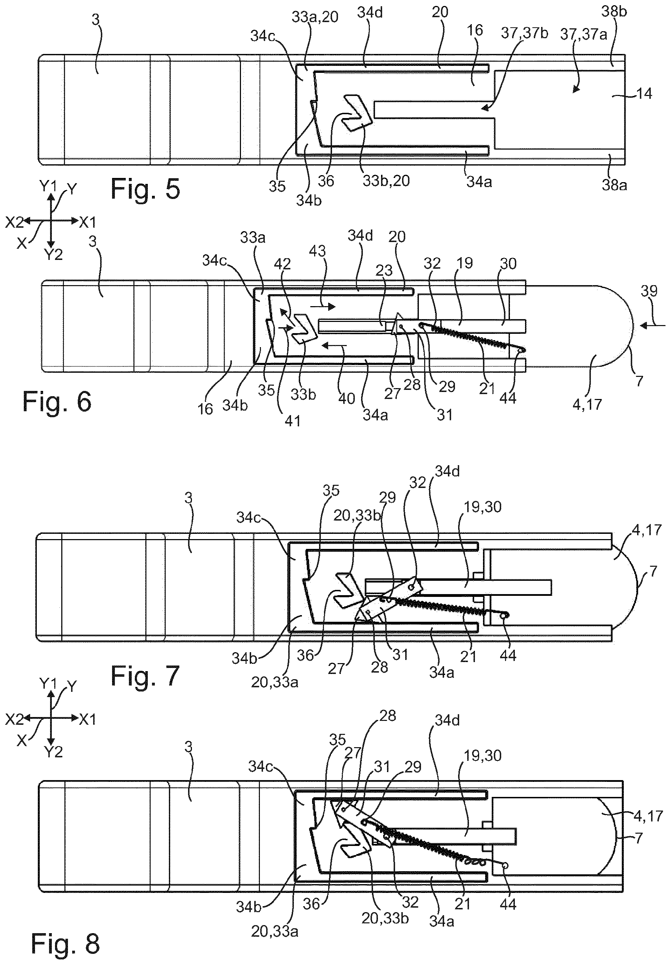

Die Figur 5 zeigt eine Ansicht von unten entlang der Höhenachse Z der Armlehne 3 und des Haltemittels 20. Die Bedienungseinrichtung 2 und das Arretiermittel 19 sind nicht dargestellt.

Das Haltemittel 20 ist an der unteren Fläche 16 der Armlehne 3 angeordnet und fest mit dieser verbunden. Das Haltemittel 20 umfasst ein äußeres Kulissenelement 33a und ein von dem äußeren Kulissenelement 33a zumindest teilweise umgebenes inneres Kulissenelement 33b. Durch das äußere Kulissenelement 38a ist das Arretiermittel 19 bzw. das Rastelement 27 führbar, wobei es durch das innere Kulissenelement 33b arretierbar ist.

Das äußere Kulissenelement 33a weist einen sich entlang der Längenachse X erstreckenden länglichen ersten Abschnitt 34a auf, wobei sich ausgehend von diesem ersten Abschnitt 34a an dessen hinteren (Richtung X2) Endbereich ein zweiter Abschnitt 34b nach rechts (Richtung Y1) verjüngend entlang der Breitenachse Y erstreckt. Ferner erstreckt sich von diesem zweiten Abschnitt 34b ein dritter Abschnitt 34c nach rechts (Richtung Y1) verjüngend entlang der Breitenachse Y, wobei der zweite Abschnitt 34b und der dritte Abschnitt 34c an ihrer Verbindungsstelle einen stufenförmigen Vorsprung 35 ausbilden. Ausgehend von dem dritten Abschnitt 34c erstreckt sich ein vierter Abschnitt 34d entlang der Längenachse X nach vorne (Richtung X1), wobei die Erstreckung des vierten Abschnitts 34d entlang der Längenachse X der Erstreckung des ersten Abschnitts 34a entlang der Längenachse X entspricht.

Das innere Kulissenelement 33b ist in Bezug auf den zweiten Abschnitt 34b und den dritten Abschnitt 34c des äußeren Kulissenelements 33a entlang der Längenachse X nach vorne (Richtung X1) versetzt angeordnet. Weiterhin ist das innere Kulissenelement 33b entlang der Breitenachse Y zwischen dem ersten Abschnitt 34a und dem vierten Abschnitt 34d des äußeren Kulissenelements 33a angeordnet. Das innere Kulissenelement 33b ist im Wesentlichen polygon-förmig ausgebildet und weist eine dem zweiten 34b und dritten Abschnitt 34c zugewandte Aussparung 36 auf. Diese Aussparung 36 ist im Wesentlichen komplementär zu dem Rastelement 27 ausgebildet.

Außerdem ist die Zugfeder 21 mit einem ersten axialen Ende mit dem Arretiermittel 19, genauer mit dem ersten Stiftelement 29, und mit einem zweiten axialen Ende mit dem Hebelelement 4, genauer mit einem zweiten Stiftelement 44, welches an der unteren Fläche 17 angeordnet ist und sich entlang der Höhenachse Z nach unten (Richtung Z2) erstreckt, verbunden.

Weiterhin weist die untere Fläche 16 der Armlehne 3 vorne (Richtung X1) eine im Wesentlichen T-förmige Aussparung 37 auf, welche einen breiten Aufnahmebereich 37a und einen schmalen Führungsbereich 37b umfasst, wobei der Führungsbereich 37b entlang der Längenachse hinter (Richtung X2) dem Aufnahmebereich 37a angeordnet ist. Der Aufnahmebereich 37a erstreckt sich in der Breitenrichtung Y nicht über die gesamte Breite der unteren Fläche 16, wodurch links und rechts Randabschnitte 38a, 38b erhalten bleiben, wobei das Hebelelement 4 auf diesen Randabschnitten 38a, 38b ruht bzw. gleitet. Durch den Aufnahmebereich 37a der Aussparung 37 wird eine Reibung verringert und die Translationsbewegungen können ungehindert stattfinden. Der Führungsbereich 37b der Aussparung 37 nimmt in dem eingefahrenen Zustand den Führungsabschnitt 30 des Arretiermittels 19 auf. Der Führungsbereich 37b der Aussparung 37 führt den Führungsabschnitt 30 des Arretiermittels 19.

In der Figur 6 ist der Arretierungsvorgang durch die Arretierungseinrichtung 18 dargestellt, wobei eine Bewegung der Elemente durch Pfeile 39-43 angedeutet ist.

Um eine Arretierung der Bedienungseinrichtung 2 bzw. des Hebelelements 4 zu erreichen, erfolgt eine translatorische Verschiebung (zweite Translationsbewegung) des Hebelelements 4 in Pfeilrichtung 39 (Längenrichtung X2), wobei das Arretiermittel 20 bzw. der Rastabschnitt 31 durch die Zugfeder 21, welche den Rastabschnitt 31 in Breitenrichtung Y2 (nach links) um die dritte Achse 32 verschwenkt bis die Rotation durch den ersten Abschnitt 34a des äußeren Kulissenelements 33a begrenzt wird, bezogen auf die Breitenachse Y links des inneren Kulissenelements 33b, geführt durch den ersten Abschnitt 34a des äußeren Kulissenelements 33a, in der Längen-richtung X2 (nach hinten) an dem inneren Kulissenelement 33b vorbeigeführt wird. Ferner wird das Arretiermittel 19 bzw. das Rastelement 27 durch den zweiten Abschnitt 34b des äußeren Kulissenelements 33a entlang der Breitenachse Y nach rechts (Breitenrichtung Y1) geführt bis das Rastelement 27 kontaktierend zu dem stufenförmigen Vorsprung 35 angeordnet ist und die Bewegung in Breitenrichtung Y1 begrenzt wird, wobei das Rastelement 27 nach einer Bewegung in Pfeilrichtung 41 in die komplementäre Aussparung 36 eingreifen kann.

Das Rastelement 27 greift in einem arretierenden Zustand in die Aussparung 36 des inneren Kulissenelements 33b des Haltemittels 20 ein.

Eine translatorische Verschiebung (erste Translationsbewegung), beispielsweise ausgelöst durch einen Bediener bzw. Fahrer durch eine Kraftbeaufschlagung der Frontfläche 7 des Hebelelements 4 entlang der Pfeilrichtung 39 (entlang der Längenachse X nach hinten, Längenrichtung X2) verursacht eine translatorische Verschiebung des Arretiermittels 19 entlang der Pfeilrichtung 39 entlang der Längenachse X in Längenrichtung X2 (nach hinten). Dadurch wird der Eingriff des Rastelements 27 in die Aussparung 35 des inneren Kulissenelementes 33b gelöst und das Arretiermittel 19 wird über das Rastelement 27 durch den dritten Abschnitt 34c des äußeren Kulissenelements 33a entlang der Pfeilrichtung 42 nach rechts (Breitenrichtung Y1) geführt, wobei sich das schwenkbar um die zweite Achse 28 gelagerte Rastelement 27 und der schwenkbar um die dritte Achse 32 gelagerte Rastabschnitt 31 der jeweiligen Neigung der Abschnitte 34a-c anpassen kann. Folglich ist das Arretiermittel 19 entlang der Pfeilrichtung 43 in Längenrichtung X1 (nach vorne) in Bezug auf die Breitenachse Y rechts (Richtung Y1) an dem inneren Kulissenelement 33b vorbeibewegbar, was der ersten Translationsbewegung des Hebelelements 4 entspricht. Somit ist die erste Translationsbewegung des Hebelelements 4 freigegeben.

Die Figuren 7 und 8 zeigen die Armlehne 3 mit der Bedienungseinrichtung 2 und der Arretierungseinrichtung 18.

Die Figur 7 zeigt dabei den Übergang von dem ausgefahrenen Zustand in den eingefahrenen Zustand (Übergang in den arretierten Zustand). Das Rastelement 27 wird durch den ersten Abschnitt 34a in der Breitenachse links (Richtung Y2) an dem inneren Kulissenelement 33b vorbeigeführt, wobei die Zugfeder 21 die Positionierung des Rastelements 27 kontaktierend zu dem ersten Abschnitt 34a gewährleiste. Eine Rotation des Rastabschnittes 31 um die dritte Achse 32 ermöglicht die Arretierung zusätzlich.

In Figur 8 wird hingegen der Übergang aus dem eingefahrenen Zustand in den ausgefahrenen Zustand (Übergang in den nicht-arretierten Zustand) dargestellt, wobei das Rastelement 27 bezogen auf die Breitenachse Y rechts an dem inneren Kulissenelement 33a vorbeigeführt wird. Zum Lösen der Arretierung wird das Hebelelement 4 in der Längenrichtung X nach hinten in die Armlehne gedrückt, wobei die Frontfläche 7 gegenüber der oberen Fläche 14 und der unteren Fläche 16 der Armlehne 3 in der Längenrichtung X nach hinten versetzt ist.

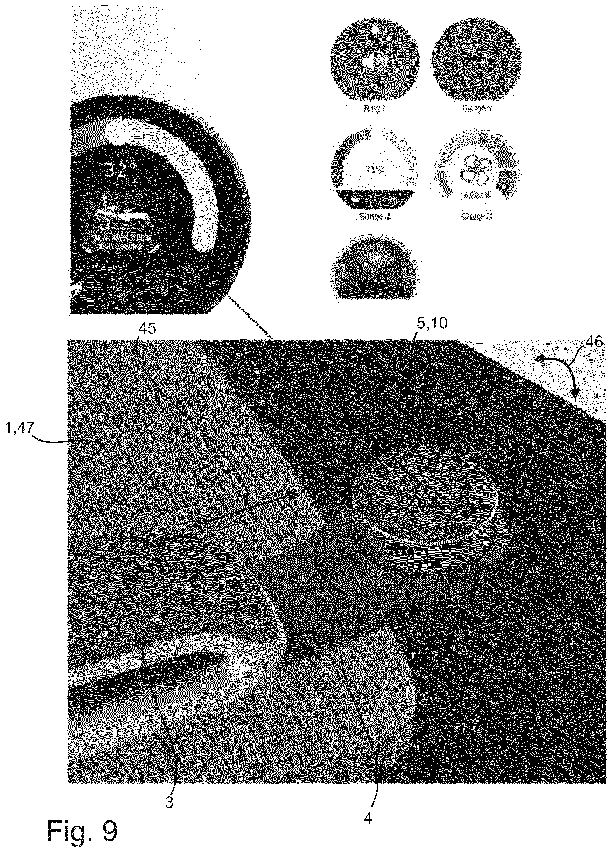

In Figur 9 ist die Bedienungseinrichtung 2, welche an einer Armlehne 3 eines eine Sitzfläche 47 umfassenden Fahrzeugsitzes 1 angeordnet ist, nochmals wiedergegeben. Diese umfasst, wie bereits erwähnt, ein an einem Hebelelement 4 angeordnetes Bedienelement 5. Das Hebelelement 4 ist entlang der Längenachse X nach vorne (Richtung X1) und nach hinten (Richtung X2) gemäß Pfeil 45 gegenüber der Armlehne 3 verschiebbar.

Es ist denkbar, dass das Hebelelement 4 in dem ausgefahrenen Zustand auch gegenüber der Armlehne 3 in der Breitenachse Y verschwenkt werden kann, wie es durch einen Doppelpfeil 46 wiedergegeben wird. Denkbar ist auch ein Verschwenken des Hebelelements 4 nach oben und unten entlang der Höhenachse Z. Das Bedienelement 5 ist drehbar in dem Hebelelement 4 angeordnet, sodass durch eine Drehbewegung verschiedene Funktionen, wie beispielsweise die Betätigung eines Navigationssystems, wie eine Adresseingabe mittels einzelner Buchstaben, durchgeführt werden kann.

Das Bedienelement 5 ist ebenso, wie in Figur 9 dargestellt, oberseitig 10 mit einer Bedienfläche ausgestattet, die berührungssensitiv ausgebildet ist und die Eingabe von verschiedenen Zeichen und das Betätigen verschiedener Funktionen durch Betätigung mittels eines Fingers des Fahrers ermöglicht.

Ebenso kann die obere Fläche 10 des Bedienelementes 5 mit einer Anzeigeeinrichtung, beispielsweise mit einem Touchscreen in Form eines Displays ausgebildet sein, sodass eine direkte Bedienung auf dieser Bedienfläche möglich ist.

Alternativ oder zusätzlich kann eine Anzeige von getätigten und bedienten Funktionen auf dem Bedienelement 5 im vorderen Bereich des Armaturenbrettes, also auf einem Display, erfolgen.

In Figur 9 sind verschiedene Darstellungen möglicher Funktionen, die mit dem Bedienelement 5 bedient werden können und gegebenenfalls auch auf diesem angezeigt werden können, dargestellt. Beispielsweise kann die Lautstärke eines Radios oder eines zu bedienenden Telefons eingestellt werden.

Es kann auch die Temperatur im Innenbereich durch Drehen oder durch Berührung der Touch-sensitiven oberen Fläche 10 des Bedienelementes 5 eingestellt werden. Ebenso ist eine Lüftung im Innenraum und für die Scheiben einstellbar.

Es können auch weitere Einstellungen, wie eine Armlehnenveränderung, insbesondere eine Höheneinstellung oder ein Nach-Vorne-Schieben oder Nach-Hinten-Schieben oder ein Verschwenken des Fahrzeugsitzes denkbar sein.

Aus Gründen der Übersicht können in den Figuren jeweils nur die relevanten Merkmale mit Bezugszeichen versehen sein.

Die Ausführungen und Beschreibungen zu Merkmalen/Elementen, welche in einer der Figuren gezeigt werden, sollen mutatis mutandis auch für das entsprechende Merkmal/Element gelten, falls es in einer anderen Figur gezeigt ist.

Es versteht sich, dass es sich bei den vorstehend erläuterten Ausführungsbeispielen lediglich um eine erste Ausgestaltung des erfindungsgemäßen Fahrzeugsitzes bzw. der Bedienungseinrichtung handelt. Insofern beschränkt sich die Ausgestaltung der Erfindung nicht auf diese Ausführungsbeispiele.

### Bezugszeichenliste

- 1: Fahrzeugsitz
- 2: Bedienungseinrichtung
- 3: Armlehne
- 4: Hebelelement
- 5: Bedienelement
- 6: obere Fläche des Hebelelements
- 7: Frontfläche des Hebelelements
- 8: Seitenfläche des Hebelelements
- 9: Mittelfläche des Hebelelements
- 10: obere Fläche des Bedienelements
- 11: Seitenfläche des Bedienelements
- 12: erste Drehachse
- 13: Rotationsrichtung
- 14: obere Fläche der Armlehne
- 15: Seitenfläche der Armlehne
- 16: untere Fläche der Armlehne
- 17: untere Fläche des Hebelelements
- 18: Arretierungseinrichtung
- 19: Arretiermittel
- 20: Haltemittel
- 21: Zugfeder
- 22: Führungseinrichtung
- 23: Führungselement
- 24: Druckfeder
- 25: hinterer Abschnitt
- 26a: erster axiales Ende
- 26b: zweites axiales Ende
- 27: Rastelement
- 28: zweite Achse
- 29: erstes Stiftelement
- 30: Führungsabschnitt
- 31: Rastabschnitt
- 32: dritte Achse
- 33a: äußeres Kulissenelement
- 33b: inneres Kulissenelement
- 34a-d: erster bis vierter Abschnitt
- 35: stufenförmiger Abschnitt
- 36: Aussparung
- 37: T-förmige Aussparung
- 37a: Aufnahmebereich
- 37b: Führungsbereich
- 38a,b: Randabschnitt
- 39: Pfeil
- 40: Pfeil
- 41: Pfeil
- 42: Pfeil
- 43: Pfeil
- 44: zweites Stiftelement
- 45: Pfeil
- 46: Pfeil
- 47: Sitzfläche

## Patentansprüche

1. Fahrzeugsitz (1), insbesondere ein Lastkraftwagensitz, mit einer Bedienungseinrichtung (2) zum Bedienen von Fahrzeugfunktionen, wobei die Bedienungseinrichtung (2) mittels einer Führungseinrichtung (22) an einer Armlehne (3) des Fahrzeugsitzes (1) angeordnet und fest mit dieser verbunden ist und ein an einem Hebelelement (4) angeordnetes Bedienelement (5) umfasst, wobei das Hebelelement (4) mittels der Führungseinrichtung (22) entlang einer Längenachse (X) der Armlehne (3) relativ zu der Armlehne (3) bewegbar ist, wobei das Hebelelement (4) durch eine erste Translationsbewegung entlang der Längenachse (X) nach vorne (X1) von einem eingefahrenen Zustand in einen ausgefahrenen Zustand und durch eine zweite Translationsbewegung entlang der Längenachse (X) nach hinten (X2) von dem ausgefahrenen Zustand in den eingefahrenen Zustand überführbar ist,
**dadurch gekennzeichnet, dass**
das Bedienelement (5) kreiszylinderförmig ausgebildet ist und sich im Wesentlichen in der Längenachse (X) und in einer Breitenachse (Y) der Armlehne (3) erstreckt, wobei das Bedienelement (5) bezogen auf eine Höhenachse (Z) der Armlehne (3) auf einer oberen Fläche (6) des Hebelelements (4) angeordnet ist, wobei das Bedienelement (5) um eine erste Drehachse (12) drehbar mit dem Hebelelement (4) verbunden ist und die erste Drehachse (12) im Wesentlichen parallel zu der Höhenachse (Z) angeordnet ist, wobei durch eine Drehbewegung des Bedienelements (5) eine Auswahl einer Funktion erfolgen kann, wobei eine obere Fläche (10) des Bedienelements (5) ein Display und eine berührungssensitive Bedienfläche umfasst.

2. Fahrzeugsitz nach Anspruch 1,
**dadurch gekennzeichnet, dass**
die Bedienungseinrichtung (2) entlang der Längenachse (X) vorne (X1) an der Armlehne (3) angeordnet ist.

3. Fahrzeugsitz nach einem der vorangegangenen Ansprüche,
**dadurch gekennzeichnet, dass**
das Hebelelement (4) und das Bedienelement (5) in dem eingefahrenen Zustand im Wesentlichen innerhalb der Armlehne (3) und in dem ausgefahrenen Zustand zumindest teilweise außerhalb der Armlehne (3) angeordnet sind, wobei das Bedienelement (5) im ausgefahrenen Zustand entlang der Längenachse (X) vor der Armlehne (3) angeordnet ist.

4. Fahrzeugsitz nach einem der vorangegangenen Ansprüche,
**dadurch gekennzeichnet, dass**
die Führungseinrichtung (22) ein länglich ausgebildetes Führungselement (23) zum Durchführen der ersten und zweiten Translationsbewegung des Hebelelements (4) aufweist, wobei ein erstes axiales Ende (26a) des Führungselements (23) fest mit der Armlehne (3) und ein zweites axiales Ende (26b) des Führungselements (23) fest mit dem Hebelelement (4) verbunden ist.

5. Fahrzeugsitz nach Anspruch 4,
**dadurch gekennzeichnet, dass**
das Führungselement (23) sich innerhalb der Armlehne entlang des Längenachse (X) der Armlehne (3) erstreckend angeordnet ist.

6. Fahrzeugsitz nach einem der vorangegangenen Ansprüche,
**dadurch gekennzeichnet, dass**
die Bedienungseinrichtung (2) eine, ein Arretiermittel (19) und ein Haltemittel (20) umfassende, Arretierungseinrichtung (18) aufweist, wobei das Arretiermittel (19) fest mit dem Hebelelement (4) und das Haltemittel (20) fest mit der Armlehne (3) verbunden ist.

7. Fahrzeugsitz nach Anspruch 6,
**dadurch gekennzeichnet, dass**
das Arretiermittel (19) länglich ausgebildet ist und sich entlang der Längenachse (X) nach hinten (X2) erstreckt, wobei das Haltemittel (20) in der Höhenachse (Z) an einer unteren Fläche (16) der Armlehne (3) angeordnet ist.

8. Fahrzeugsitz nach Anspruch 6 oder 7,
**dadurch gekennzeichnet, dass**
die erste Translationsbewegung durch ein Eingreifen des Arretiermittels (19) in das Haltemittel (20) arretierbar ist.

## Claims

1. Vehicle seat (1), in particular a lorry seat, with a control device (2) for controlling vehicle functions, wherein the control device (2) is arranged on an armrest (3) of the vehicle seat (1) by means of a guide device (22) and fixedly connected thereto and comprises a control element (5) arranged on a lever element (4),
wherein the lever element (4) is movable along a longitudinal axis (X) of the armrest (3) relative to the armrest (3) by means of the guide device (22), wherein the lever element (4) is transitionable forward (X1) along the longitudinal axis (X) by means of a first translational movement from a retracted state to an extended state and rearward (X2) along the longitudinal axis (X) by means of a second translational movement from the extended state to the retracted state, **characterised in that**
the control element (5) is formed in the shape of a circular cylinder and extends substantially in the longitudinal axis (X) and in a width axis (Y) of the armrest (3), wherein the control element (5) is arranged on an upper surface (6) of the lever element (4) with respect to a height axis (Z) of the armrest (3), wherein the control element (5) is rotatably connected to the lever element (4) around a first axis of rotation (12), and the first axis of rotation (12) being arranged substantially parallel to the height axis (Z), wherein by a rotational movement of the control element (5) a function may be selected, wherein an upper surface (10) of the control element (5) comprises a display and a touch sensitive control surface.

2. Vehicle seat according to claim 1,
**characterised in that**
the control device (2) is arranged along the longitudinal axis (X) on the front (X1) of the armrest (3).

3. Vehicle seat according to any of the preceding claims,
**characterised in that**
the lever element (4) and the control element (5) are arranged in the retracted state substantially within the armrest (3) and in the extended state at least partially outside the armrest (3), wherein the control element (5) is arranged along the longitudinal axis (X) in front of the armrest (3) in the extended state.

4. Vehicle seat according to any of the preceding claims,
**characterised in that**
the guide device (22) has an elongated guide element (23) for performing the first and second translational movement of the lever element (4), wherein a first axial end (26a) of the guide element (23) is fixedly connected to the armrest (3), and a second axial end (26b) of the guide element (23) is fixedly connected to the lever element (4).

5. Vehicle seat according to claim 4,
**characterised in that**
the guide element (23) is arranged to extend within the armrest along the longitudinal axis (X) of the armrest (3).

6. Vehicle seat according to any of the preceding claims,
**characterised in that**
the control device (2) has a locking device (18) comprising a locking means (19) and a retaining means (20), wherein the locking means (19) is fixedly connected to the lever element (4), and the retaining means (20) is fixedly connected to the armrest (3).

7. Vehicle seat according to claim 6,
**characterised in that**
the locking means (19) is elongated and extends rearward (X2) along the longitudinal axis (X), wherein the retaining means (20) is arranged on a lower surface (16) of the armrest (3) with respect to the height axis (Z).

8. Vehicle seat according to claim 6 or claim 7,
**characterised in that**
the first translational movement can be locked by engagement of the locking means (19) in the retaining means (20).

## Revendications

1. Siège de véhicule (1), en particulier siège de camion, comportant un dispositif de commande (2) pour la commande de fonctions du véhicule, le dispositif de commande (2) étant disposé sur un accoudoir (3) du siège de véhicule (1) au moyen d'un dispositif de guidage (22) et étant relié solidement avec ce dernier et comportant un élément de commande (5) disposé sur un élément levier (4), l'élément levier (4) est déplaçable au moyen du dispositif de guidage (22) le long d'un axe longitudinal (X) de l'accoudoir (3) par rapport à l'accoudoir (3), l'élément levier (4) étant transférable par un premier mouvement de translation le long de l'axe longitudinal (X) vers l'avant (X1) d'un état rétracté à un état déployé et par un deuxième mouvement de translation le long de l'axe longitudinal (X) vers l'arrière (X2) de l'état déployé à l'état rétracté,
**caractérisé par le fait que**
l'élément de commande (5) est réalisé en forme de cylindre à base circulaire et s'étend sensiblement dans l'axe longitudinal (X) et dans un axe de la largeur (Y) de l'accoudoir (3), l'élément de commande (5) étant disposé sur une face supérieure (6) de l'élément levier (4) par rapport à un axe de la hauteur (Z) de l'accoudoir (3), l'élément de commande (5) étant relié de manière rotative avec l'élément levier (4) autour d'un premier axe de rotation (12) et le premier axe de rotation (12) étant disposé sensiblement parallèlement à l'axe de la hauteur (Z), une sélection d'une fonction pouvant avoir lieu par un mouvement de rotation de l'élément de commande (5), une face supérieure (10) de l'élément de commande (5) comportant un affichage et une face de commande sensible au toucher.

2. Siège de véhicule selon la revendication 1, **caractérisé par le fait que**
le dispositif de commande (2) est disposé le long de l'axe longitudinal (X) à l'avant (X1) de l'accoudoir (3).

3. Siège de véhicule selon l'une des revendications précédentes,
**caractérisé par le fait que**
l'élément levier (4) et l'élément de commande (5) sont disposés sensiblement à l'intérieur de l'accoudoir (3) dans l'état rétracté et au moins partiellement à l'extérieur de l'accoudoir (3) dans l'état déployé, l'élément de commande (5) étant disposé devant l'accoudoir (3) le long de l'axe longitudinal (X) dans l'état déployé.

4. Siège de véhicule selon l'une des revendications précédentes,
**caractérisé par le fait que**
le dispositif de guidage (22) présente un élément de guidage (23) réalisé de forme allongée pour effectuer les premier et second mouvements de translation de l'élément levier (4), une première extrémité axiale (26a) de l'élément de guidage (23) étant reliée solidement avec l'accoudoir (3) et une seconde extrémité axiale (26b) de l'élément de guidage (23) étant reliée solidement avec l'élément levier (4).

5. Siège de véhicule selon la revendication 4, **caractérisé par le fait que**
l'élément de guidage (23) est disposé en s'étendant à l'intérieur de l'accoudoir le long de l'axe longitudinal (X) de l'accoudoir (3).

6. Siège de véhicule selon l'une des revendications précédentes,
**caractérisé par le fait que**
le dispositif de commande (2) présente un dispositif d'arrêt (18) comportant un moyen d'arrêt (19) et un moyen de maintien (20), le moyen d'arrêt (19) étant relié solidement avec l'élément levier (4) et le moyen de maintien (20) étant relié solidement avec l'accoudoir (3).

7. Siège de véhicule selon la revendication 6, **caractérisé par le fait que**
le moyen d'arrêt (19) est réalisé de forme allongée et s'étend vers l'arrière (X2) le long de l'axe longitudinal (X), le moyen de maintien (20) étant disposé dans l'axe de la hauteur (Z) sur une face inférieure (16) de l'accoudoir (3).

8. Siège de véhicule selon l'une des revendications 6 ou 7,
**caractérisé par le fait que**
le premier mouvement de translation est apte à être arrêté par un engagement du moyen d'arrêt (19) dans le moyen de maintien (20).
